# EUROPÄISCHE PATENTSCHRIFT

(11) **EP 2 315 088 B1**
(45) Veröffentlichungstag und Bekanntmachung des Hinweises auf die Patenterteilung: **13.03.2013**
(21) Anmeldenummer: 09173909.4
(22) Anmeldetag: 23.10.2009
(51) Int. Cl.: G05B 19/042, G05B 9/02

(54) **Sicherheitssteuerung**
Safety control
Commande de sécurité

(43) Veröffentlichungstag der Anmeldung: 27.04.2011
(73) Patentinhaber: SICK AG, 79183 Waldkirch (DE)
(72) Erfinder: Weddingfeld, Klaus, 79183, Waldkirch (DE); Koepcke, Oliver, 79395, Neuenburg (DE)
(74) Vertreter: Hehl, Ulrich

(56) Entgegenhaltungen:
- EP-A1- 0 905 594
- EP-A1- 2 075 655
- EP-A1- 2 098 924
- EP-A2- 1 703 346

## Beschreibung

Die Erfindung betrifft eine Sicherheitssteuerung mit einer Kommunikationsschnittstelle für den Anschluss einer weiteren Sicherheitssteuerung nach dem Oberbegriff von Anspruch 1 sowie ein Verfahren zur Erzeugung von Steuerungssignalen nach dem Oberbegriff von Anspruch 11.

Sicherheitssteuerungen dienen unter anderem dazu, bei Anliegen eines Gefahrensignals fehlerfrei auf eine vorgegebene Art zu reagieren. Eine typische Anwendung der Sicherheitstechnik ist die Absicherung gefährlicher Maschinen, wie etwa Pressen oder Roboter, die sofort abgeschaltet oder abgesichert werden müssen, wenn sich Bedienpersonal in unerlaubter Weise nähert. Dazu ist ein Sensor vorgesehen, der die Annäherung erkennt, wie etwa ein Lichtgitter oder eine Sicherheitskamera. Erkennt ein solcher Sensor eine Gefährdung, so muss eine mit dem Sensor verbundene Sicherheitssteuerung absolut zuverlässig ein Abschaltsignal generieren.

In der Praxis überwacht zumeist nicht ein einzelner Sensor eine einzelne Maschine, sondern es müssen eine ganze Reihe von Gefährdungsquellen überwacht werden. Die entsprechende Vielzahl zugehöriger Sensoren, die jeweils ein Schaltereignis definieren können, und geeigneter Maßnahmen zur Beseitigung von Gefährdungen muss dann in der Sicherheitssteuerung konfiguriert und verschaltet werden. Die Programmierung der Sicherheitssteuerung wird zwar durch professionelle grafische Programmieroberflächen unterstützt, erfordert aber vor allem deshalb vertiefte Kenntnisse, weil jeder Fehler in der Sicherheitssteuerung zu einer Gefährdung von Personen führt. Die Norm IEC 61131 zur Programmierung von Steuerungssystemen beschreibt in IEC 61131-3 die grafische Programmierung mittels Funktionsbausteinen sowie eine IO-Schnittstellenbeschreibung in physikalisch-technischen Werten in IEC 61131-2. Die Konfiguration der Eingangs- und Ausgangsbeschaltung und deren Schnittstellen zu Sensoren und Aktoren allerdings ist nicht standardisiert.

Dokument EP 2 098 924 A1 offenbart ein Verfahren zum Konfigurieren und Programmieren einer Sicherheitsteuerung, um ein Steuerungsprogramm für eine Sicherheitsteuerung mit einer Kommunikationsschnittstelle für den Anschluss einer weiteren Sicherheitssteuerung aufzustellen.

Die in der Praxis eingesetzten Maschinenkonzepte werden zunehmend modular und erlauben eine Vielzahl von Optionen. Modularität bedeutet einerseits, dass die Sicherheitssteuerung selbst modular erweiterbar ist, um an Veränderungen und Ergänzungen in der angeschlossenen Sensorik oder Aktorik angepasst zu werden. Andererseits werden auch mehrere Sicherheitssteuerungen in einem Netzwerk miteinander verbunden. Das ist beispielsweise dann sinnvoll, wenn jeweils eine Sicherheitssteuerung für eine Maschine oder ein Anlagenteil verantwortlich ist. In diesem Fall ist zwar ein Großteil der Steuerungsfunktionalität jeweils lokal auf die zugehörige Maschine bezogen. Zugleich gibt es Signale, beispielsweise ein Notaus, welche die Sicherheitssteuerungen untereinander kommunizieren müssen.

Wird dann der Aufbau der Anlage verändert, indem Maschinen hinzugefügt, entfernt oder ausgetauscht werden, so sind die Steuerungsprogramme der in dem Netzwerk verbundenen Sicherheitssteuerungen nicht mehr gültig und es bedarf einer Umprogrammierung und anschließenden erneuten Inbetriebnahme, die nur entsprechend ausgebildetes Personal leisten kann. Würde man ohne Umprogrammierung eine Sicherheitssteuerung aus dem Netzwerk entfernen, so gilt das Netzwerk als gestört, so dass es die Freigabe für den Betrieb aus sicherheitstechnischen Gründen verweigert.

In einer modularen Anlage mit maximal n Maschinen, die jeweils in einer konkreten Anwendung vorhanden sein können oder nicht, gibt es *2ⁿ* mögliche Teilkonfigurationen. Dasselbe gilt für das entsprechende Netzwerk aus n Sicherheitssteuerungen, die jeweils einer der Maschinen zugeordnet sind. Herkömmlich sind somit bis zu *2ⁿ* Versionen der jeweiligen Steuerungsprogramme einer jeden Sicherheitssteuerung notwendig, um diese Kombinatorik abzubilden. Das ist nicht nur ein enormer Aufwand, es erfordert auch eine qualifizierte und damit fehleranfällige Programmierung oder zumindest Auswahl der in der konkreten Anwendung benötigten Steuerungsprogrammen durch einen Steuerungsexperten. Die herkömmlichen Lösungen sind damit ebenso zeit- und kostenaufwändig wie unflexibel.

Daher ist Aufgabe der Erfindung, eine einfache und sichere Möglichkeit zu schaffen, eine vernetzte Sicherheitssteuerung an Veränderungen in der Anlage anzupassen.

Diese Aufgabe wird durch eine Sicherheitssteuerung gemäß Anspruch 1 und ein Verfahren zur Erzeugung von Steuerungssignalen gemäß Anspruch 11 gelöst. Dabei geht die Lösung von dem Grundgedanken aus, das Steuerungsprogramm gerade nicht in Abhängigkeit von der konkreten Konfiguration der vernetzten Sicherheitssteuerungen zu entwerfen. Stattdessen verwendet das Steuerungsprogramm stets die gleiche Logik, so als würden tatsächlich nicht vorhandene Sicherheitssteuerungen an der Netzkommunikation teilnehmen. Um ein sinnvolles Verhalten sicherzustellen, werden Informationen vordefiniert, die bei Fehlen einer Sicherheitssteuerung an die Stelle der von dieser Sicherheitssteuerung erwarteten steuerungsrelevanten Informationen treten.

Das Steuerungsprogramm ist damit erfindungsgemäß zwar effektiv abhängig von der erkannten Konfiguration der in dem Netzwerk teilnehmenden Sicherheitssteuerungen. Dazu muss aber das Steuerungsprogramm nicht angepasst werden, die Logikregeln bleiben unverändert. Das Steuerungsprogramm muss lediglich entscheiden, dass wegen des Fehlens der erwarteten Sicherheitssteuerung in dem Netzwerk anstelle der zu übertragenden Informationen die vordefinierten Informationen verwendet werden.

Die Erfindung hat den Vorteil, dass dasselbe Steuerungsprogramm die gesamte Kombinatorik einer modularen Anlage abdeckt. Es ist bei Änderungen im Anlagenaufbau keine qualifizierte Inbetriebnahme erforderlich, denn das Steuerungsprogramm bleibt unverändert. Das Netzwerk aus Sicherheitssteuerungen bleibt unabhängig von den tatsächlich konkret vorhandenen Sicherheitssteuerungen stets voll funktionsfähig. Damit entsteht eine hohe Flexibilität und eine sehr schnelle Möglichkeit, die Anlage einschließlich der voll funktionsfähigen Sicherheitssteuerung zu verändern.

Die steuerungsrelevanten Informationen sind bevorzugt zumindest Teile des Prozessabbilds der jeweiligen Sicherheitssteuerung. Da die erforderliche Bandbreite in der Praxis relativ gering ist, wird noch bevorzugter jeweils das gesamte Prozessabbild übertragen. In dem Prozessabbild können beispielsweise Zustände einiger oder aller Eingänge und/oder Ausgänge als Bitwerte repräsentiert sein. Grundsätzlich steht es aber der Sicherheitssteuerung frei, ihr eigenes Prozessabbild festzulegen und beispielsweise Zwischenergebnisse der Logik abzubilden. Beispielsweise kann Byte 2 Bit 4 bedeuten, dass Motor 1 läuft/steht, während Byte 3 Bit 5 Nothalt 3 gedrückt/nicht gedrückt repräsentiert, unabhängig davon, wie komplex die Sensorik und die Logik ist, die zu diesem Ergebnis führt. Auch die Breite des übertragenen Prozessabbilds, oder allgemeiner die Anzahl der übertragenen Informationsbits der steuerungsrelevanten Informationen, kann zwischen über die Kommunikationsschnittstelle verbundenen Sicherheitssteuerungen abweichen.

Die vordefinierten Informationen sind bevorzugt zumindest Teile eines fiktiven Prozessabbilds der erwarteten Sicherheitssteuerung bei ungestörtem Betrieb. Auch hier wird noch bevorzugter ein vollständiges Prozessabbild vordefiniert. Wenn die Sicherheitssteuerung in Abwesenheit einer erwarteten angeschlossenen Sicherheitssteuerung auf dieses vordefinierte Prozessabbild zurückgreift, arbeitet der Netzwerkverbund der Sicherheitssteuerungen genauso reibungslos, als sei die fehlende Sicherheitssteuerung angeschlossen.

Die Kommunikationsschnittstelle ist bevorzugt für eine sichere Kommunikation ausgebildet. Die steuerungsrelevanten Informationen, die über die Kommunikationsschnittstelle ausgetauscht werden, sind im Allgemeinen in die Logikregeln der Sicherheitssteuerung eingebunden und damit sicherheitskritisch. Eine Möglichkeit für eine sichere Kommunikation ist die Verwendung eines bekannten Busstandards, wie CAN oder Profibus, der durch ein zusätzliches Sicherheitsprotokoll oder durch redundante, zusätzliche Leitungen sicher weitergebildet wird.

Die Sicherheitssteuerung ist bevorzugt modular aufgebaut und weist mindestens ein Anschlussmodul mit den Eingängen und/oder den Ausgängen auf, wobei ein erstes Anschlussmodul an die Steuerungseinheit und die weiteren Anschlussmodule an jeweils nur ein vorgeordnetes Anschlussmodul angeschlossen sind, so dass die Steuerungseinheit mit den Anschlussmodulen eine Modulreihe bildet. Der modulare Aufbau der einzelnen Sicherheitsteuerung ermöglicht flexible Anpassungen in der Sensorik und Aktorik derjenigen Maschine oder desjenigen Anlagenteils, der von der Sicherheitssteuerung überwacht wird.

Vorteilhafterweise bildet die Steuerungseinheit ein Steuerungsmodul, und sowohl Anschlussmodule als auch Steuerungsmodul sind in jeweils einem Gehäuse mit untereinander in zumindest einigen Dimensionen identischer Außengeometrie untergebracht, wobei jedes Anschlussmodul eine Verbindung für ein vorgeordnetes Modul und eine Verbindung für ein nachgeordnetes Modul der Modulreihe aufweist. So lassen sich Modulreihen übersichtlich und mit planbarem Platzbedarf aufbauen. Die Außengeometrie des Steuerungsmoduls kann gezielt von derjenigen der Anschlussmodule abweichen, um sie besser sichtbar zu machen und um Raum für den erhöhten Bedarf an Elektronik zu schaffen. Diese Abweichung muss aber nicht alle Dimensionen betreffen, so dass beispielsweise das Steuerungsmodul gegenüber den Anschlussmodulen dieselbe Breite und Tiefe, aber eine abweichende Höhe hat.

In erfindungsgemäßer Weiterbildung werden mehrere derartige Sicherheitssteuerungen in einem über die Kommunikationsschnittstellen verbundenen Netzwerk angeordnet, wobei eine der Sicherheitssteuerungen als Master und die übrigen Sicherheitssteuerungen als Slave ausgebildet sind, oder wobei in einem Multi-Master-Netzwerk mehrere oder alle verbundenen Sicherheitssteuerungen als Master ausgebildet sind. Ein Multi-Master-Netzwerk, in dem mehrere oder alle Sicherheitssteuerungen als Master ausgebildet sind, unterstützt die Modularität, denn jede Sicherheitssteuerung kann ohne Störung der Netzwerkkommunikation herausgenommen werden, solange ein Master im Netzwerk verbleibt. Am robustesten ist eine Multi-Master-Ausführungsform, in der regelmäßig sämtliche vollständigen Prozessabbilder zwischen allen Sicherheitssteuerungen ausgetauscht werden (all-to-all), so dass jeder Sicherheitssteuerung sämtliche steuerungsrelevanten Informationen der Anordnung zur Verfügung stehen.

Das Steuerungsprogramm jeder Sicherheitssteuerung in dem Netzwerk verwendet bevorzugt Logikregeln für eine vorgegebene maximale Konfiguration mit einer vorgegebenen maximalen Anzahl von Sicherheitssteuerungen. Eine Anlage wird damit in ihrer maximalen Ausprägung projektiert, die Logikregeln und Steuerungsprogramme werden entsprechend implementiert sowie die vordefinierten Informationen gespeichert. Jede einzelne Sicherheitssteuerung verarbeitet im Betrieb den für sie zutreffenden Anteil der eigenen und der über das Netzwerk ausgetauschten steuerungsrelevanten Informationen und kommuniziert die Ergebnisse ihrer Auswertung. Wird in der späteren konkreten Anwendung nur eine Teilkonfiguration der maximalen Konfiguration verwirklicht, so verwenden die Sicherheitssteuerungen für die gegenüber der maximalen Konfiguration fehlenden Sicherheitssteuerungen die gespeicherten vordefinierten Informationen. Die Anordnung ist damit für sämtliche Teilkonfigurationen vorbereitet, soweit eine Teilkonfiguration noch sinnvoll ist und vordefinierte Informationen gespeichert sind. Selbstverständlich ist auch denkbar, in bestimmten Lösungen einzelne Sicherheitssteuerungen als obligatorisch und damit nicht austauschbar vorzusehen. Für solche Sicherheitssteuerungen müssen dann auch keine vordefinierten Informationen gespeichert werden, da diese Sicherheitssteuerungen im Betrieb stets präsent sein werden.

Die Steuerungsprogramme der einzelnen Sicherheitssteuerungen der Anordnung untereinander vergleichen bevorzugt, insbesondere bei Aktivierung der Sicherheitssteuerung, ob alle Sicherheitssteuerungen der Anordnung für dieselbe maximale Konfiguration ausgebildet sind. Unter Aktivieren ist hier das Einschalten beziehungsweise Hochfahren der Anlage zu verstehen. Eine Inbetriebnahme ist eine besondere Aktivierung, bei der eine neue oder veränderte Anlage erstmals eingeschaltet wird. Eine Inbetriebnahme erfordert meist besonders qualifiziertes Personal und ist erfindungsgemäß nicht zwingend erforderlich, wenn sich die Netzwerkkonfiguration der Sicherheitssteuerungen verändert. Bei Aktivieren soll nach dieser Ausführungsform geprüft werden, ob die Sicherheitssteuerungen in dem konkret realisierten Netz sinnvoll zusammenarbeiten werden. Dazu gehört Einigkeit über die verwendeten vordefinierten Informationen. Das lässt sich beispielsweise über eine Identifikationsnummer abfragen.

Die Steuerungsprogramme der einzelnen Sicherheitssteuerungen der Anordnung untereinander vergleichen bevorzugt, insbesondere bei Aktivierung der Sicherheitssteuerung, ob die Sicherheitssteuerungen der Anordnung einer gespeicherten Teilkonfiguration der maximalen Konfiguration entsprechen. Auch wenn erfindungsgemäß Veränderungen in der Anordnung der Sicherheitssteuerungen unterstützt werden, darf dies nicht wahllos und zu beliebigen Zeiten geschehen. Ein Austausch während des laufenden Betriebs würde in einer sicherheitstechnischen Anwendung als Ausfall gewertet und zu einer sicherheitsgerichteten Reaktion führen. Aber auch bei der Aktivierung muss erkannt werden, ob die veränderte Netzwerkkonfiguration gewollt oder beispielsweise das Ergebnis eines Defekts oder einer versehentlichen Trennung von Verbindungsleitungen ist. Deshalb wird die zuletzt eingestellte Netzwerkkonfiguration gespeichert, und eine dagegen veränderte Netzwerkkonfiguration führt entweder unmittelbar zur Verweigerung der Freigabe der Anlage, oder es wird eine entsprechend zu autorisierende Zustimmung einer qualifizierten Bedienperson gefordert.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Logikregeln und die vordefinierten Informationen sind dabei bevorzugt für eine maximale Konfiguration einer maximalen Anzahl von Sicherheitssteuerungen in einem Netzwerk ausgelegt. Dann können später auf sehr einfache Weise beliebige Teilkonfigurationen ausgewählt werden.

Eine Anpassung an eine Teilkonfiguration der maximalen Konfiguration erfolgt bevorzugt dadurch, dass Sicherheitssteuerungen aus dem Netzwerk herausgenommen oder ausgetauscht werden, wobei die veränderte Konfiguration insbesondere durch eine Autorisierung freigegeben wird. Aufgrund der vordefinierten Informationen ist durch diese einfachen Schritte die Umprogrammierung der vernetzten Sicherheitssteuerungen bereits abgeschlossen. Die Steuerungsprogramme müssen nicht verändert werden.

Vorteilhafterweise wird geprüft, insbesondere bei Aktivierung der Sicherheitssteuerung, ob alle zu einem Netzwerk verbundenen Sicherheitssteuerungen für dieselbe maximale Konfiguration ausgebildet sind. Damit wird verhindert, dass nicht aufeinander abgestimmte Sicherheitssteuerungen ein Netzwerk bilden, die beispielsweise unterschiedliche vordefinierte Informationen verwenden.

Bevorzugt wird geprüft, insbesondere bei Aktivierung der Sicherheitssteuerung, ob alle zu einem Netzwerk verbundenen Sicherheitssteuerungen einer gespeicherten Teilkonfiguration der maximalen Konfiguration entsprechen. Ungewollte Veränderungen des Netzwerks werden so ausgeschlossen.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Blockdarstellung eines Netzwerks aus mehreren Si- cherheitssteuerungen in einer Maximalkonfiguration;
- Fig. 2: eine Darstellung gemäß Figur 1 in einer Teilkonfiguration, in der einige Si- cherheitssteuerungen entfernt sind; und
- Fig. 3: eine Übersichtsdarstellung einer beispielhaften Anlage mit Sensoren und Aktoren und ihren Anschlüssen an eine modulare Sicherheitssteuerung.

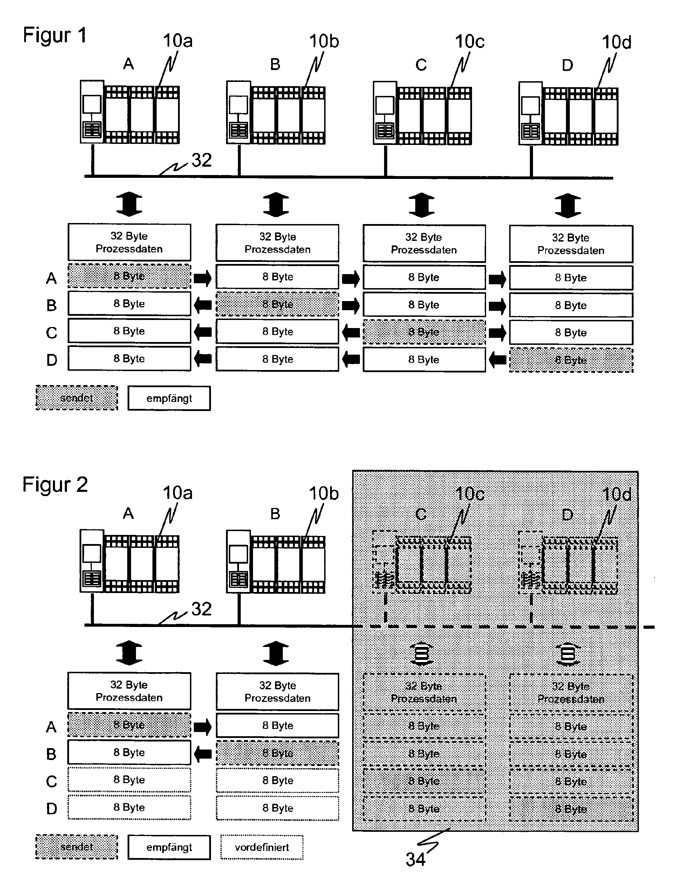

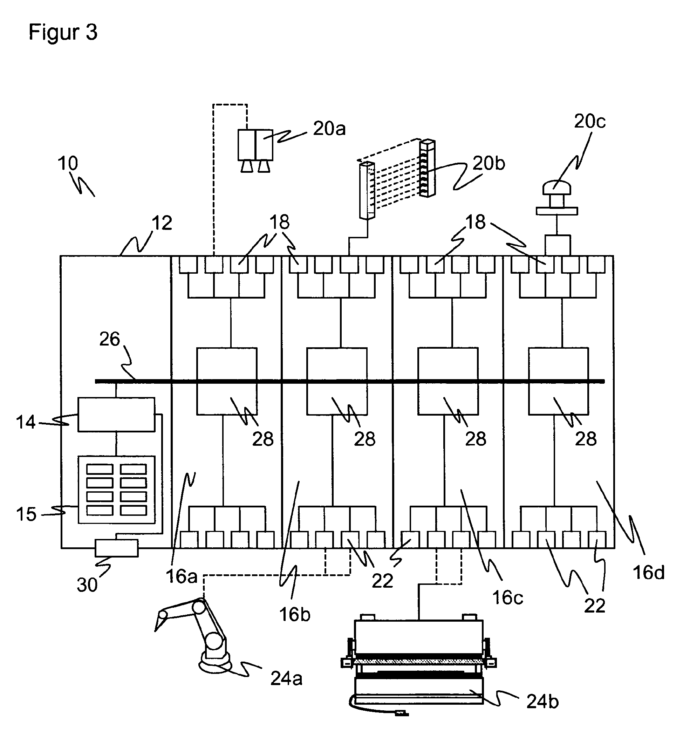

Figur 3 zeigt eine modulare Sicherheitssteuerung 10 mit einem Steuerungsmodul 12, welches eine sichere Steuerungseinheit 14 aufweist, also beispielsweise einen Mikroprozessor oder einen anderen Logikbaustein. In dem Steuerungsmodul 12 ist ein Speicherbereich 15 vorgesehen, in dem ein oder mehrere vordefinierte Prozessabbilder abgelegt sind und auf den die Steuerungseinheit 14 zugreifen kann, wie weiter unten im Zusammenhang mit den Figuren 1 und 2 näher erläutert.

Mit dem Steuerungsmodul 12 sind sequentiell vier Anschlussmodule 16a-d verbunden. In den Anschlussmodulen 16a-d sind Eingänge 18 zum Anschluss von Sensoren 20a-c und Ausgänge 22 zum Anschluss von Aktoren 24a-b vorgesehen. Im Gegensatz zu der Darstellung können sich die Anschlussmodule 16a-d in Art und Anzahl ihrer Anschlüsse unterscheiden und nur Eingänge, nur Ausgänge sowie eine Mischung aus beidem in unterschiedlicher Anzahl haben. Auch die Anordnung und die physische Ausbildung der Anschlussklemmen 18, 22 ist durch Wahl eines bestimmten Anschlussmoduls 16 anpassbar an verschiedene Steckertypen, Kabelgrößen und Signalarten. Schließlich sind die Module 12, 16a-d vereinfacht dargestellt und können weitere Elemente aufweisen, beispielsweise je eine LED für jeden Anschluss in übersichtlicher, die Zugehörigkeit optisch hervorhebender Anordnung.

Die Sicherheitssteuerung hat die Aufgabe, für einen sicheren Betrieb der Sensoren 20a-c und vor allem der Aktoren 24a-b zu sorgen, also Aktoren 24a-b sicherheitsgerichtet abzuschalten (der Ausgang 22 ist dann ein OSSD, Output Switching Signal Device), ein Not-Aus der Anlage sicher auszuführen, einer beliebigen Ansteuerung an einen Aktor 24a-b, besonders einem Einschalten oder einem Wiederhochfahren zuzustimmen, Aktoren 24a-b freizugeben und dergleichen.

Ein Lichtgitter 20b, eine Sicherheitskamera 20a und ein Schalter 20c sind Beispiele für sicherheitsrelevante Sensoren oder Eingänge, welche ein Signal liefern können, auf das als Reaktion eine sicherheitsgerichtete Abschaltung erfolgt. Dies kann eine Unterbrechung der Lichtstrahlen des Lichtgitters 20b durch ein Körperteil, die Erkennung eines unzulässigen Eingriffs in einen Schutzbereich durch die Sicherheitskamera 20a oder ein Betätigen des Schalters 20c sein. An die Eingänge 18 können weitere Sicherheitssensoren beliebiger Art, wie Laserscanner, 3D-Kameras, Schaltmatten oder kapazitive Sensoren angeschlossen werden, aber auch sonstige Sensoren etwa zur Aufnahme von Messdaten oder einfache Schalter wie ein Not-Aus-Schalter. Alle derartigen Signalgeber werden hier und im Folgenden als Sensor bezeichnet.

Bei bestimmten Anwendungen sind auch Sensoren 20 an Ausgänge 22 und Aktoren 24 an Eingänge 18 angeschlossen, etwa um Testsignale zu übertragen, um einen Sensor 20 vorübergehend stumm zu schalten (muting), Teilbereiche aus dem Überwachungsbereich des Sensors 20 auszublenden (blanking), oder weil ein Aktor 24 neben einem Eingang für Ansteuerungen auch eigene Signalausgänge besitzt, mit denen er sich zum Teil selbst überwacht.

An Ausgänge 22 sind bevorzugt zweikanalig ein Roboter 24a und eine Abkantpresse 24b angeschlossen, die Beispiele für Bedienpersonal bei unzulässigem Eingriff gefährdende Aktoren darstellen. Diese Aktoren 24a-b können somit von der Sicherheitssteuerung 10 einen Abschaltbefehl erhalten, um sie bei Erkennung einer Gefährdung oder eines unzulässigen Eingriffs durch Sicherheitssensoren 20a-b abzuschalten oder in einen sicheren Zustand zu verbringen. Dabei kann das Lichtgitter 20a der Überwachung der Abkantpresse 24a und die Sicherheitskamera 20b der Überwachung des Roboters 24b dienen, so dass einander funktionell zugehörige Sensoren 20a-b und Aktoren 24a-b auch jeweils an einem Modul 16a bzw. 16b angeschlossen sind. Die funktionelle Zuordnung erfolgt aber über die Steuerungseinheit 14, so dass eine solche Abbildung der Anlage zwar übersichtlicher, keineswegs aber erforderlich ist. Weitere als die dargestellten Aktoren sind denkbar, und zwar sowohl solche, welche einen Gefahrenbereich erzeugen als auch andere, etwa eine Warnlampe, eine Sirene, eine Anzeige und dergleichen mehr.

Zwischen der Steuerungseinheit 14 und den Eingängen 18 bzw. den Ausgängen 22 besteht eine Backplane genannte serielle Kommunikationsverbindung 26, die insbesondere ein Bus ist und auf einem seriellen Standard, einem Feldbusstandard, wie IO-Link, Profibus, CAN oder auch einem proprietären Standard basieren und zusätzlich auch fehlersicher ausgelegt sein kann. Alternativ zu einem Bus kann auch eine direkte, eine parallele Verbindung oder eine sonstige den zu kommunizierenden Datenmengen und den erforderlichen Schaltzeiten entsprechende Verbindung 26 vorgesehen sein. Die Module 16a-d weisen eine eigene Steuerung 28 auf, um an der Buskommunikation teilnehmen zu können. Hierfür kann ein Mikroprozessor, ein FPGA, ein ASIC, eine programmierbare Logik oder ein ähnlicher digitaler Baustein vorgesehen sein. Die Steuerungen 28 können auch Auswertungsaufgaben übernehmen oder gemeinsam mit der Steuerungseinheit 14 verteilte Auswertungen vornehmen, die von einfachen Bool'schen Verknüpfungen bis hin zu komplexen Auswertungen, etwa einer dreidimensionalen Sicherheitskamera, reichen können.

Die Module 12, 16a-d sind jeweils in einheitlichen Gehäusen untergebracht und werden durch Anschlussstücke mechanisch und elektrisch miteinander verbunden. Das Steuerungsmodul 12 bildet somit den Kopf einer Modulreihe.

Sicherheitssteuerung 14, Eingänge 18, Ausgänge 22 und Bus 26 sind fehlersicher ausgebildet, also durch Maßnahmen wie zweikanalige Ausführung, durch diversitäre, redundante, selbstprüfende oder sonst sichere Auswertungen und Selbsttests. Entsprechende Sicherheitsanforderungen für die Sicherheitssteuerung sind in der Norm EN 954-1 bzw. ISO 13849 (performance level) festgelegt. Die damit mögliche Sicherheitsstufe und die weiteren Sicherheitsanforderungen an eine Anwendung sind in der Norm EN 61508 bzw. EN 62061 definiert.

Die Konfiguration und Programmierung der Sicherheitssteuerung 10 erfolgt in der Praxis über eine grafische Benutzeroberfläche, mit deren Hilfe ein Steuerungsprogramm erstellt und anschließend aufgespielt wird.

Erfindungsgemäß ist vorgesehen, mehrere Sicherheitssteuerungen 10 der beschriebenen Art zu einem Netzwerk zusammenzuschließen. Dazu weist das Steuerungsmodul 12 mindestens eine Schnittstelle 30 auf, über welche die Sicherheitssteuerungen beispielweise mittels eines sicheren Busprotokolls miteinander kommunizieren.

Figur 1 zeigt eine vereinfachte Blockdarstellung eines Netzwerks aus mehreren, hier beispielhaft vier Sicherheitssteuerungen 10a-d, die mittels ihrer jeweiligen Schnittstelle 30 über einen Bus 32 miteinander verbunden sind. Die Sicherheitssteuerungen 10a-d müssen nicht untereinander gleichartig ausgebildet sein, können also eine unterschiedliche Anzahl von Anschlussmodulen 16, von Eingängen 18, von Ausgängen 22 und unterschiedliche angeschlossene Sensoren 20, Aktoren 24 sowie eine unterschiedliche Auswertungslogik aufweisen. In der praktischen Anwendung ist jede Sicherheitssteuerung 10a-d einem in sich abgeschlossenen Teil einer modularen Anlage zugeordnet, beispielsweise einer einzelnen Maschine, um diesen Teil sicherheitstechnisch zu überwachen.

Über das Netzwerk 32 tauschen die Sicherheitssteuerungen 10a-d die relevanten Steuerungsinformationen untereinander aus. Das ist beispielsweise ein Notaus, welcher in der von der Sicherheitssteuerung 10c überwachten Maschine ausgelöst wird, aber die ganze Anlage stillsetzen soll. Die Auswertungslogik jeder einzelnen Sicherheitsteuerung 10a-d verknüpft also mit ihren Logikregeln nicht nur die Eingangssignale an den eigenen Eingängen 18, sondern auch die über das Netzwerk 32 empfangenen steuerungsrelevanten Informationen zu Steuerungssignalen an ihren Ausgängen 22. Die Information über die so ermittelten Steuerungssignale wird möglicherweise zudem über das Prozessabbild den anderen Sicherheitssteuerungen 10a-d mitgeteilt. Damit das Steuerungsprogramm in jeder Sicherheitssteuerung 10a-d autark entscheiden kann, welche der relevanten Steuerungsinformationen tatsächlich in die Logikregeln einbezogen werden soll, werden die vollständigen Prozessabbilder kommuniziert, ohne dass jede Sicherheitssteuerung 10a-d alle Informationen der Prozessabbilder in ihre Logikregeln einbeziehen muss. Denkbar ist alternativ, nur einen Teil der Prozessabbilder oder andere, weiter komprimierte Informationen auszutauschen, etwa dass ein Nothalt ausgelöst wurde.

Jede der Sicherheitssteuerungen 10a-d ist für den Austausch der Prozessabbilder als Master ausgebildet, sendet ihr aktuelles Prozessabbild an alle anderen Sicherheitssteuerungen 10a-d und empfängt entsprechend die Prozessabbilder der übrigen Sicherheitssteuerungen 10a-d, wie im unteren Teil der Figur 1 dargestellt. Dabei sind Prozessabbilder von acht Byte Breite, die sich bei vier Sicherheitssteuerungen 10a-d zu 32 Byte Prozessdaten addieren, rein beispielhaft zu verstehen. Die Prozessabbilder können davon nicht nur insgesamt, sondern sogar von Sicherheitssteuerung 10a-d zu Sicherheitssteuerung 10a-d abweichen.

Die in Figur 1 dargestellte Konfiguration ist ein projektiertes maximales Gesamtsystem. Das Steuerungsprogramm jeder Sicherheitssteuerungen 10a-d ist zunächst dafür ausgelegt, dass es im Betrieb die Prozessdaten der anderen Sicherheitssteuerungen erhält, denn die Logikregeln können von den oder Teilen der so erhaltenen Prozessdaten abhängig definiert sein.

Figur 2 zeigt eine Teilkonfiguration der maximalen Konfiguration der Figur 1. Dabei wurden zwei Sicherheitssteuerungen 10c-d aus dem Netzwerk entfernt, wie durch Schattierung hinter einem Rechteck 34 illustriert. Das tatsächlich vorhandene Netzwerk besteht damit nur noch aus zwei Sicherheitssteuerungen 10a-b. Da die Steuerungsprogramme mit ihren Logikregeln aber die Informationen der fehlenden Sicherheitssteuerungen 10c-d erwarten, werden die nicht über das Netzwerk kommunizierten Prozessdaten durch vordefinierte Prozessdaten (Default-Prozessabbild) ersetzt, die in dem jeweiligen Speicher 15 der Sicherheitssteuerungen 10a-b abgelegt sind. Die vordefinierten Prozessdaten sind so gewählt, dass die vorhandenen Sicherheitssteuerungen 10a-b auch in Abwesenheit der Sicherheitssteuerungen 10c-d sinnvolle Steuerungssignale liefern, also beispielsweise mit Prozessdaten, wie sie dem ungestörten Normalbetrieb der Sicherheitssteuerungen entsprechen. Bei dem mehrfach verwendeten Beispiel eines Nothalts, der an einer der fehlenden Sicherheitssteuerungen 10cd vorgesehen wäre, sind etwa die den Nothaltschalter repräsentierenden Prozessdaten so gesetzt, dass der Nothaltschalter nicht aktiviert ist.

Bei der Projektierung des maximalen Gesamtsystems gemäß Figur 1 werden für jeden Teilnehmer, also jede Sicherheitssteuerung 10a-d, auch die vordefinierten Prozessdaten festgelegt und den anderen Sicherheitssteuerungen 10a-d bekannt gemacht.

Aufgrund der vordefinierten Prozessdaten ist auch die Teilkonfiguration der Figur 2 voll einsatzfähig, ohne dass an den Steuerungsprogrammen etwas geändert werden muss, und ohne dass die Logikregeln Fallunterscheidungen treffen müssen, um die möglichen Teilkonfigurationen zu erfassen.

Die Sicherheitssteuerungen 10a-d prüfen, ob sie zu derselben maximalen Konfiguration gehören, beispielsweise durch Austausch einer eindeutigen Verbund-Identifikationsnummer. So wird sichergestellt, dass die vordefinierten Prozessdaten zueinander passen. Diese Prüfung findet in erster Linie beim Hochfahren der Anlage statt. Wird ein Teilnehmer aus einem anderen Verbund erkannt, läuft das System nicht an.

Die tatsächliche Teilkonfiguration, wie sie beispielhaft in Figur 2 gezeigt ist, wird in den Sicherheitssteuerungen 10a-d gespeichert. Beim Hochlauf der Anlage werden die vorhandenen Sicherheitssteuerungen 10a-d mit der gespeicherten Teilkonfiguration verglichen. Wenn alle Sicherheitssteuerungen 10a-d die gleiche Verbund-Identifikationsnummer aufweisen und das Netzwerk alle erwarteten Sicherheitssteuerungen 10a-d umfasst, kann die Anlage freigegeben werden.

Weicht die erkannte Teilkonfiguration von der gespeicherten Teilkonfiguration ab, etwa weil eine Sicherheitssteuerung 10a-d fehlt, gibt es dafür zwei denkbare Ursachen: Einen Defekt oder einen gezielten Umbau der Anlage. Deshalb fragt das System über einen Bestätigungsmechanismus ab, ob die Änderungen beabsichtigt sind und die erkannte Anlage der gewünschten Teilkonfiguration entspricht. Bleibt eine Bestätigung aus, so wird die Freigabe verweigert. Nach erfolgter Bestätigung wird die neue Teilkonfiguration abgespeichert, und die Sicherheitssteuerungen 10a-d des Verbundes arbeiten mit den vordefinierten Prozessdaten für die gegenüber der maximalen Konfiguration fehlenden Sicherheitssteuerungen 10a-d. Außer dem Abklemmen zu entfernender Sicherheitssteuerungen 10a-d beziehungsweise den neuen Verbindungen ausgetauschter Sicherheitssteuerungen 10a-d und dem Autorisieren der neuen Teilkonfiguration sind keine weiteren Schritte erforderlich, um das Netzwerk der Sicherheitssteuerungen 10a-d an die umgebaute Anlage anzupassen.

## Patentansprüche

1. Sicherheitssteuerung (10) mit mindestens einem Eingang (18) für den Anschluss eines Sensors (20), mindestens einem Ausgang (22) für den Anschluss eines Aktors (24), mindestens einer Kommunikationsschnittstelle (30) für den Anschluss einer weiteren Sicherheitssteuerung (10a-d), um steuerungsrelevante Informationen auszutauschen sowie mit einer Steuerungseinheit (14), die dafür ausgebildet ist, ein Steuerungsprogramm auszuführen, welches anhand vorgebbarer Logikregeln an den Ausgängen (22) ein Steuerungssignal in Abhängigkeit von Eingangssignalen an den Eingängen (18) und/oder in Abhängigkeit von den steuerungsrelevanten Informationen erzeugt,
**dadurch gekennzeichnet,**
**dass** das Steuerungsprogramm dann, wenn es feststellt, dass eine erwartete Sicherheitssteuerung (10a-d) nicht angeschlossen ist, anstelle der von der erwarteten Sicherheitssteuerung (10a-d) zu übertragenden steuerungsrelevanten Informationen vordefinierte Informationen verwendet.

2. Sicherheitssteuerung (10) nach Anspruch 1,
wobei die steuerungsrelevanten Informationen zumindest Teile des Prozessabbilds der jeweiligen Sicherheitssteuerung (10a-d) sind.

3. Sicherheitssteuerung (10) nach einem der vorhergehenden Ansprüche,
wobei die vordefinierten Informationen zumindest Teile eines fiktiven Prozessabbilds der erwarteten Sicherheitssteuerung (10a-d) bei ungestörtem Betrieb sind.

4. Sicherheitssteuerung (10) nach einem der vorhergehenden Ansprüche,
wobei die Kommunikationsschnittstelle (30) für eine sichere Kommunikation ausgebildet ist.

5. Sicherheitssteuerung (10) nach einem der vorhergehenden Ansprüche,
die modular aufgebaut ist und mindestens ein Anschlussmodul (16) mit den Eingängen (18) und/oder den Ausgängen (22) aufweist, wobei ein erstes Anschlussmodul (16a) an die Steuerungseinheit (14) und die weiteren Anschlussmodule (16b-d) an jeweils nur ein vorgeordnetes Anschlussmodul (16a-c) angeschlossen sind, so dass die Steuerungseinheit (14) mit den Anschlussmodulen (16a-d) eine Modulreihe bildet.

6. Sicherheitssteuerung (10) nach Anspruch 5,
wobei die Steuerungseinheit (14) ein Steuerungsmodul (12) bildet und sowohl Anschlussmodule (16a-d) als auch Steuerungsmodul (12) in jeweils einem Gehäuse mit untereinander in zumindest einigen Dimensionen identischer Außengeometrie untergebracht sind, und wobei jedes Anschlussmodul (16a-d) eine Verbindung für ein vorgeordnetes Modul (12, 16a-c) und eine Verbindung für ein nachgeordnetes Modul (16b-d) der Modulreihe aufweist.

7. Anordnung mehrerer Sicherheitssteuerungen (10a-d) nach einem der vorhergehenden Ansprüche in einem über die Kommunikationsschnittstellen (30) verbundenen Netzwerk, wobei eine der Sicherheitssteuerungen (10a-d) als Master und die übrigen Sicherheitssteuerungen (10a-d) als Slave ausgebildet sind, oder wobei in einem Multi-Master-Netzwerk mehrere oder alle verbundenen Sicherheitssteuerungen (10a-d) als Master ausgebildet sind.

8. Anordnung nach Anspruch 7,
wobei das Steuerungsprogramm jeder Sicherheitssteuerung (10a-d) in dem Netzwerk Logikregeln für eine vorgegebene maximale Konfiguration mit einer vorgegebenen maximalen Anzahl von Sicherheitssteuerungen (10a-d) verwendet.

9. Anordnung nach Anspruch 8,
wobei die Steuerungsprogramme der einzelnen Sicherheitssteuerungen (10a-d) der Anordnung untereinander vergleichen, insbesondere bei Aktivierung der Sicherheitssteuerung (10a-d), ob alle Sicherheitssteuerungen (10a-d) der Anordnung für dieselbe maximale Konfiguration ausgebildet sind.

10. Anordnung nach Anspruch 8 oder 9,
wobei die Steuerungsprogramme der einzelnen Sicherheitssteuerungen (10a-d) der Anordnung untereinander vergleichen, insbesondere bei Aktivierung der Sicherheitssteuerung (10a-d), ob die Sicherheitssteuerungen (10a-d) der Anordnung einer gespeicherten Teilkonfiguration der maximalen Konfiguration entsprechen.

11. Verfahren zur Erzeugung von Steuerungssignalen an mindestens einen Aktor (24) an einem Ausgang (22) einer Sicherheitssteuerung (10) anhand vorgebbarer Logikregeln in Abhängigkeit von Eingangssignalen von mindestens einem Sensor (20) an einem Eingang (18) der Sicherheitssteuerung (10) und in Abhängigkeit von steuerungsrelevanten Informationen, die mit einer weiteren Sicherheitssteuerung (10a-d) an mindestens einer Kommunikationsschnittstelle (30) ausgetauscht werden,
**dadurch gekennzeichnet,**
**dass** dann, wenn eine erwartete Sicherheitssteuerung (10a-d) nicht an einer Kommunikationsschnittstelle (30) angeschlossen ist, anstelle der von der erwarteten Sicherheitssteuerung (10a-d) zu übertragenden steuerungsrelevanten Informationen vordefinierte Informationen zur Erzeugung der Steuerungssignale verwendet werden.

12. Verfahren nach Anspruch 11,
wobei die Logikregeln und die vordefinierten Informationen für eine maximale Konfiguration einer maximalen Anzahl von Sicherheitssteuerungen (10a-d) in einem Netzwerk ausgelegt sind.

13. Verfahren nach Anspruch 12,
wobei eine Anpassung an eine Teilkonfiguration der maximalen Konfiguration dadurch erfolgt, dass Sicherheitssteuerungen (10a-d) aus dem Netzwerk herausgenommen oder ausgetauscht werden, wobei die veränderte Konfiguration insbesondere durch eine Autorisierung freigegeben wird.

14. Verfahren nach Anspruch 12 oder 13,
wobei geprüft wird, insbesondere bei Aktivierung der Sicherheitssteuerung (10a-d), ob alle zu einem Netzwerk verbundenen Sicherheitssteuerungen (10a-d) für dieselbe maximale Konfiguration ausgebildet sind.

15. Verfahren nach einem der Ansprüche 12 bis 14,
wobei geprüft wird, insbesondere bei Aktivierung der Sicherheitssteuerung (10a-d), ob alle zu einem Netzwerk verbundenen Sicherheitssteuerungen (10a-d) einer gespeicherten Teilkonfiguration der maximalen Konfiguration entsprechen.

## Claims

1. A safety controller (10) having at least one input (18) for the connection of a sensor (20), at least one output (22) for the connection of an actuator (24), at least one communications interface (30) for the connection of another safety controller (10a-d) to exchange control-relevant information and having a control unit (14) which is configured to carry out a control program which generates a control signal based on presetable logic rules at the outputs (22) in dependence on input signals at the inputs (18) and/or in dependence on the control-relevant information,
**characterized in that**
the control program, when it determines that an expected safety controller (10a-d) is not connected, uses predefined information instead of the control-relevant information to be transferred from the expected safety controller (10a-d).

2. A safety controller (10) in accordance with claim 1,
wherein the control-relevant information is at least parts of the process image of the respective safety controller (10a-d).

3. A safety controller (10) in accordance with any of the preceding claims,
wherein the predefined information is at least parts of a notional process image of the expected safety controller (10a-d) in undisturbed operation.

4. A safety controller (10) in accordance with any of the preceding claims,
wherein the communications interface (30) is made for a safe communication.

5. A safety controller (10) in accordance with any of the preceding claims,
which is of modular construction and has at least one connector module (16) with the inputs (18) and/or the outputs (22), wherein a first connector module (16a) is connected to the control unit (14) and the further connector modules (16b-d) are connected to only one respective prepositioned connector module (16a-c) so that the control unit (14) forms a module series with the connector modules (16a-d).

6. A safety controller (10) in accordance with claim 5,
wherein the control unit (14) forms a control module (12) and both the connector modules (16a-d) and the control modules (12) are accommodated in a respective housing with an external geometry identical in at least some dimensions; and wherein each connector module (16a-d) has a connection for a prepositioned module (12, 16a-c) and a connection for a postpositioned module (16b-d) of the module series.

7. An arrangement of a plurality of safety controllers (10a-d) in accordance with any of the preceding claims in a network connected via the communications interfaces (30), wherein one of the safety controllers (20a-d) is made as a master and the remaining safety controllers (10a-d) are made as slaves; or wherein a plurality of or all of the connected safety controllers (10-d) are made as masters in a multi-master network.

8. An arrangement in accordance with claim 7,
wherein the control program of each safety controller (10a-d) in the network uses logic rules for a preset maximum configuration with a preset maximum number of safety controllers (10a-d).

9. An arrangement in accordance with claim 8,
wherein the control programs of the individual safety controllers (10a-d) of the arrangement among one another compare, in particular on activation of the safety controller (10a-d), whether all the safety controllers (10a-d) of the arrangement are made for the same maximum configuration.

10. An arrangement in accordance with claim 8 or 9,
wherein the control programs of the individual safety controllers (10a-d) of the arrangement among one another compare, in particular on activation of the safety controller(10a-d), whether the safety controllers (10a-d) of the arrangement correspond to a stored partial configuration of the maximum configuration.

11. A method for the generation of control signals to at least one actuator (24) at an output (22) of a safety controller (10) based on presettable logic rules in dependence on input signals from at least one sensor (20) at an input (18) of the safety controller (10) and in dependence on control-relevant information which is exchanged with a further safety controller (10a-d) at at least one communications interface (30),
**characterized in that**,
when an expected safety controller (10a-d) is not connected to a communications interface (30), predefined information is used for the generation of the control signals instead of the control-relevant information to be transferred from the expected safety controller (10a-d).

12. A method in accordance with claim 11,
wherein the logic rules and the predefined information are configured for a maximum configuration of a maximum number of safety controllers (10a-d) in a network.

13. A method in accordance with claim 12,
wherein an adaptation to a partial configuration of the maximum configuration takes place in that safety controllers (10a-d) are removed from or replaced in the network, with the changed configuration in particular being released by an authorization.

14. A method in accordance with claim 12 or 13,
wherein a check is made, in particular on activation of the safety controller (10a-d), whether all the safety controllers (10a-d) connected to form a network are made for the same maximum configuration.

15. A method in accordance with any of claims 12 to 14,
wherein a check is made, in particular on activation of the safety controller (10a-d), whether all the safety controllers (10a-d) connected to form a network correspond to a stored part configuration of the maximum configuration.

## Revendications

1. Commande de sécurité (10) comprenant au moins une entrée (18) pour la connexion d'un capteur (20), au moins une sortie (22) pour la connexion d'un acteur (24), au moins une interface de communication (30) pour la connexion d'une autre commande de sécurité (10a-d) afin d'échanger des informations pertinentes pour la commande, et comprenant une unité de commande (14) qui est réalisée pour exécuter un programme de commande qui, au moyen de règles logiques prédéterminées, engendre au niveau des sorties (22) un signal de commande en fonction de signaux d'entrée aux entrées (18) et/ou en fonction des informations pertinentes pour la commande,
**caractérisée en ce que**
lorsqu'il constate qu'une commande de sécurité (10a-d) attendue n'est pas connectée, le programme de commande utilise des informations prédéfinies à la place des informations pertinentes pour la commande à transmettre par la commande de sécurité (10a-d) attendue.

2. Commande de sécurité (10) selon la revendication 1,
dans laquelle les informations pertinentes pour la commande sont au moins des parties de l'image du processus de la commande de sécurité respective (10a-d).

3. Commande de sécurité (10) selon l'une des revendications précédentes,
dans laquelle les informations prédéfinies sont au moins une partie d'une image fictive du processus de la commande de sécurité attendue (10a-d) lors d'un fonctionnement non perturbé.

4. Commande de sécurité (10) selon l'une des revendications précédentes,
dans laquelle l'interface de communication (30) est réalisée pour une communication sécurisée.

5. Commande de sécurité (10) selon l'une des revendications précédentes, qui est conçue de façon modulaire et qui comprend au moins un module de connexion (16) avec les entrées (18) et/ou les sorties (22), dans laquelle un premier module de connexion (16a) est connecté à l'unité de commande (14) et les autres modules de connexion (16b-b) sont connectés respectivement uniquement à un module de connexion (16a-c) disposé en amont, de sorte que l'unité de commande (14) avec les modules de connexion (16a-d) forme une rangée de modules.

6. Commande de sécurité (10) selon la revendication 5,
dans lequel l'unité de commande (14) forme un module de commande (12) et les modules de connexion (16a-d) ainsi que le module de commande (12) sont logés respectivement dans un boîtier avec une géométrie extérieure identique les uns avec les autres, au moins dans quelques dimensions, et dans laquelle chaque module de connexion (16a-d) comporte une liaison pour un module (12, 16a-c) disposé en amont, et une liaison pour un module (16b-d) disposé en aval, de la rangée de modules.

7. Agencement de plusieurs commandes de sécurité (10a-d) selon l'une des revendications précédentes dans un réseau relié via les interfaces de communication (30), dans lequel l'une des commandes de sécurité (10a-d) est réalisée comme commande maître, et les autres commandes de sécurité (10a-d) sont réalisées comme commandes asservies, ou dans lequel, dans un réseau à multiples maîtres, plusieurs commandes de sécurité, ou toutes les commandes de sécurité reliées (10a-d) sont réalisées comme des commandes maîtres.

8. Agencement selon la revendication 7,
dans lequel le programme de commande de chaque commande de sécurité (10a-d) utilise dans le réseau des règles logiques pour une configuration maximale prédéterminée avec un nombre maximum prédéterminé de commandes de sécurité (10a-d).

9. Agencement selon la revendication 8,
dans lequel les programmes de commande des commandes de sécurité individuelles (10a-d) de l'agencement comparent les uns par rapport aux autres pour savoir, en particulier lors de l'activation de la commande de sécurité (10a-d), si toutes les commandes de sécurité (10a-d) de l'agencement sont réalisées pour la même configuration maximale.

10. Agencement selon la revendication 8 ou 9,
dans lequel les programmes de commande des commandes de sécurité individuelles (10a-d) de l'agencement comparent les uns par rapport aux autres pour savoir, en particulier lors de l'activation de la commande de sécurité (10a-d), si les commandes de sécurité (10a-d) de l'agencement correspondent à une configuration partielle mémorisée de la configuration maximale.

11. Procédé pour générer des signaux de commande vers au moins un acteur (24) à une sortie (22) d'une commande de sécurité (10) au moyen de règles logiques prédéterminées en fonction de signaux d'entrée depuis au moins un capteur (20) à une entrée (18) de la commande de sécurité (10), et en fonction d'informations pertinentes pour la commande, qui sont échangées avec une autre commande de sécurité (10a-d) à au moins une interface de communication (30),
**caractérisé en ce que**
lorsqu'une commande de sécurité attendue (10a-d) n'est pas connectée à une interface de communication (30), on utilise des informations prédéfinies à la place des informations pertinentes pour la commande à transmettre depuis la commande de sécurité (10a-d) attendue pour engendrer les signaux de commande.

12. Procédé selon la revendication 11,
dans lequel les règles logiques et les informations prédéfinies sont conçues pour une configuration maximale d'un nombre maximum de commandes de sécurité (10a-d) dans un réseau.

13. Procédé selon la revendication 12,
dans lequel une adaptation à une configuration partielle de la configuration maximum a lieu en ce que des commandes de sécurité (10a-d) sont soustraites du réseau ou échangées, et la configuration modifiée est libérée en particulier par une autorisation.

14. Procédé selon la revendication 12 ou 13,
dans lequel on vérifie, en particulier par activation de la commande de sécurité (10a-d), si toutes les commandes de sécurité (10a-d) reliées en un réseau, sont réalisées pour la même configuration maximale.

15. Procédé selon l'une des revendications 12 à 14,
dans lequel on vérifie, en particulier par activation de la commande de sécurité (10a), si toutes les commandes de sécurité (10a-d) reliées en un réseau correspondent à une configuration partielle mémorisée de la configuration maximale.
